(19) Europäisches Patentamt / European Patent Office / Office européen des brevets

(11) **EP 4 482 905 B1**

(12) **EUROPEAN PATENT SPECIFICATION**

(45) Date of publication and mention
of the grant of the patent:
**17.06.2026 Bulletin 2026/25**

(21) Application number: **23707177.4**

(22) Date of filing: **13.02.2023**

(51) International Patent Classification (IPC):
*C09J 123/08* (2006.01)   *B32B 27/32* (2006.01)
*C08K 5/09* (2006.01)   *C08K 5/05* (2006.01)
*C08L 91/06* (2006.01)   *C09J 153/00* (2006.01)
*C09J 123/20* (2006.01)   *C09J 123/14* (2006.01)
*C09J 123/12* (2006.01)   *B32B 5/02* (2006.01)
*B32B 5/26* (2006.01)   *B32B 7/12* (2006.01)
*B32B 27/08* (2006.01)   *B32B 27/12* (2006.01)

(52) Cooperative Patent Classification (CPC):
(C-Sets available)
**C09J 123/14; B32B 5/022; B32B 5/266;
B32B 7/12; B32B 27/08; B32B 27/12; B32B 27/32;
C09J 123/0815; C09J 123/12; C09J 123/20;
C09J 153/00;** B32B 2255/02; B32B 2255/10;
B32B 2255/26; B32B 2439/70;          (Cont.)

(86) International application number:
**PCT/IB2023/051268**

(87) International publication number:
**WO 2023/161761 (31.08.2023 Gazette 2023/35)**

(54) **HOT MELT ADHESIVE COMPOSITION**

HEISSSCHMELZKLEBEZUSAMMENSETZUNG

COMPOSITION ADHÉSIVE THERMOFUSIBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.02.2022 ZA 202202256**

(43) Date of publication of application:
**01.01.2025 Bulletin 2025/01**

(73) Proprietor: **Sasol South Africa Limited
2196 Sandton (ZA)**

(72) Inventors:
• **VAN HELDEN, Pieter
1911 Vanderbijlpark (ZA)**
• **VERMEULEN, Johannes, Petrus
1947 Sasolburg (ZA)**

(74) Representative: **Hoffmann Eitle
Patent- und Rechtsanwälte PartmbB
Arabellastraße 30
81925 München (DE)**

(56) References cited:
EP-B1- 2 640 791          WO-A1-2020/049454
US-A1- 2009 305 060

(52) Cooperative Patent Classification (CPC): (Cont.)
B32B 2439/80

C-Sets
**C09J 123/0815, C08L 91/06, C08K 5/09;**
**C09J 123/12, C08L 91/06, C08K 5/09;**

**C09J 123/14, C08L 91/06, C08K 5/05;**
**C09J 123/14, C08L 91/06, C08K 5/09;**
**C09J 123/20, C08L 91/06, C08K 5/05;**
**C09J 123/20, C08L 91/06, C08K 5/09;**
**C09J 153/00, C08L 91/06, C08K 5/05;**
**C09J 153/00, C08L 91/06, C08K 5/09**

**Description**

Field of the invention

This invention relates to adhesive compositions. In particular, the invention relates to hot melt adhesive (HMA) compositions.

Background

Waxes are known to be used as additives in hot melt adhesive formulations, where they typically function as nucleating agents, diluents, or viscosity reducers. The aim of using waxes in hot melt adhesive formulations is, amongst others, to improve set time (i.e. to reduce set time, since fast set times are typically preferred for hot melt adhesives) and to increase the strength of the bond between the substrates. The strength of the bond between the substrates is often measured by the "T-peel" strength.

As nucleating agents, waxes improve the elongation at break of the polymer material in an HMA. As diluents, waxes promote the wetting and reduce the (melt) viscosity of the adhesive formulation, which allows the reduction of cost and the control of the speed of application of the adhesive. From the viewpoint of the improvement of the flexibility and the improvement of the wettability due to a decrease in the viscosity, the wax content of an HMA is decisive.

Waxes in general are mostly defined as chemical compositions, which have a drop melting point above 40°C, are polishable under slight pressure, are kneadable or hard to brittle and transparent to opaque at 20°C, melt above 40°C without decomposition, and typically melt between 50 and 90°C with exceptional cases up to 200°C, form pastes or gels and are poor conductors of heat and electricity.

Waxes can be classified according to various criteria such as e.g. their origin. Here, waxes can be divided into two main groups: natural and synthetic waxes. Natural waxes can further be divided into fossil waxes (e.g. petroleum waxes) and non-fossil waxes (e.g. animal and vegetable waxes). Petroleum waxes are divided into macrocrystalline waxes (paraffin waxes) and microcrystalline waxes (microwaxes). Synthetic waxes can be divided into partially synthetic waxes (e.g. amide waxes) and fully synthetic waxes (e.g. polyolefin- and Fischer-Tropsch waxes).

Paraffin waxes originate from petroleum sources. They are clear, odour free and can be refined for food contact. They contain a range of (primarily) n-alkanes and iso-alkanes as well as some cyclo-alkanes. Raw or crude paraffin waxes (slack waxes) have a great number of short-chain alkanes ("oils") which are removed when further refined. Different distributions and qualities of paraffin waxes can be obtained. Refining may include de-oiling, distillation, and hydrogenation.

Synthetic Fischer-Tropsch waxes or hydrocarbons originating from the catalysed Fischer-Tropsch synthesis of syngas (CO and $H_2$) to alkanes contain predominantly n-alkanes, a low number of branched alkanes and basically no cyclo-alkanes or impurities like e.g. sulphur or nitrogen. In return the number of olefins and oxygenates (i.e. oxidized hydrocarbons such as alcohols, esters, ketones and/or aldehydes) may be higher and different to petroleum-based waxes.

Fischer-Tropsch waxes can generally be classified in low melting (congealing point of 20 to 45°C), medium melting (congealing point of 45°C to 70°C) and high-melting waxes (congealing point of 70 to 110°C).

Another source of synthetic waxes are products obtained from the oligomerization or polymerization of olefinic monomers, possibly followed by hydrogenation.

Hydrocarbon waxes are natural or synthetic waxes comprising predominantly of hydrocarbons. Hydrocarbons are molecules that consist of carbon and hydrogen atoms. If not otherwise mentioned "n-", or "linear" refers to a linear and aliphatic, and "i-", "iso-" or "branched" refers to branched and aliphatic.

WO2017/0130094 relates to a process for the preparation of a granulated plasticizer formulation, which comprises the steps of preparing a mixture of a long-chain branched alcohol with polypropylene, heating said mixture until it reaches the melting point of polypropylene and is perfectly fluid, extruding the molten mixture obtained, and cutting the extruded mixture to obtain granules of uniform size. Also disclosed is a formulation thus obtained, a process for plasticizing poly(lactic acid) using the formulation, and plasticized poly(lactic acid) monofilaments or film thus obtained.

WO2020/049454 relates to a hot melt adhesive formulation comprising a hydrocarbon wax which shows a high T-peel strength and thus allows a reduction in the coating weight and therefore also the amount of hot melt adhesive used.

CN104762032A discloses a hot melt adhesive that can withstand high and low temperatures, and which is resistant to fats or oils. Aliphatic alcohols are disclosed as lubricants in the manufacture of said hot melt adhesives.

EP632077A2 and WO1996/015170A1 relate to a moisture-curable hot-melt adhesive composition comprising a polyisocyanate-reacted maleated polyolefin. As examples, NOVA Guerbet Alcohol 20i® hydroxyl-functional polyolefin (NOVA Molecular Technologies, Inc.) or Unilin® 700 (Petrolite Corp.) as a linear hydrocarbon alcohol having 50 carbon atoms are disclosed as part of the HMA.

EP2640791B1 relates to a hot melt adhesive composition comprising: (a) a polymer component; (b) a wax; and (c) a templating agent. The templating agent is a sugar or sugar alcohol derivative, or has a structure of Ar-LI-X-L2-R wherein X is a sugar or a sugar alcohol; Ar is a substituted or unsubstituted aryl-containing functional group; R is H, alky, alkenyl, hydroxyl, alkoxy and alkyl-halide, or a substituted or unsubstituted aryl-containing functional group; and LI and L2, independently, are acetal or ether functional group.

DE10048923A1 discloses the use of sugar alcohols in the formation of wax film coatings on hot melt adhesive pellets.

US10793754B2 relates to a styrene-isoprene block copolymer HMA comprising an amorphous wax for a hygiene article, wherein the wax can be modified by a carboxylic acid or carboxylic anhydride.

A suitable test for characterizing hot melt adhesives is the dynamic mechanical analysis (abbreviated as DMA). It is a technique used to study and characterize materials, especially the viscoelastic behaviour of polymers. A sinusoidal stress is applied and the strain in the material is measured, allowing one to determine the storage modulus. The temperature of the sample or the frequency of the stress are often varied, leading to variations in the storage modulus; this approach can be used to locate the glass transition temperature ($T_g$) of the material, as well as to identify transitions corresponding to other molecular motions.

In purely elastic materials the stress and strain occur in phase, so that the response of one occurs simultaneously with the other. In purely viscous materials, there is a phase difference between stress and strain, where strain lags stress by a 90-degree ($\pi/2$ radian) phase lag. Viscoelastic materials exhibit behaviour somewhere in between that of purely viscous and purely elastic materials, exhibiting some phase lag in strain.

Stress and strain in a viscoelastic material can be represented using the following expressions:

Strain:

$$\varepsilon = \varepsilon_0 \sin(\omega t)$$

Stress:

$$\sigma = \sigma_0 \sin(\omega t + \delta)$$

where
$\omega = 2\pi f$ where f is frequency of strain oscillation, t is time, $\delta$ is phase lag between stress and strain.

The tensile storage and loss moduli in viscoelastic materials measure the stored energy, representing the elastic portion, and the energy dissipated as heat, representing the viscous portion. The tensile storage and loss moduli are defined as follows:

Storage:

$$E' = (\sigma_0 / \varepsilon_0) \cos\delta$$

Loss:

$$E'' = (\sigma_0 / \varepsilon_0) \sin\delta$$

Similarly, the shear storage and shear loss moduli G' and G" are defined. G' reflects the stability of the material to recover from deformation or retain energy and it is therefore an indication of stiffness/elasticity of the material. G" reflects the ability of the material to dissipate energy.

The ratio between the loss modulus and the storage modulus in a viscoelastic material is defined as the tan $\delta$ (tan delta), which provides a measure of dampening in the material. Tan delta can also be visualized in vector space as the tangent of the phase angle between the storage and loss moduli.

Tensile

$$: \tan\delta = E'' / E'$$

Shear

$$: \tan \delta = G'' / G'$$

For example, a material with a tan delta greater than one will exhibit more dampening than a material with a tan delta less than one, i.e. the material is more viscous than elastic. The reason that a material with a tan delta greater than one shows more dampening is because the loss modulus of the material is greater than the storage modulus, which means the energy dissipating, viscous component of the complex modulus dominates the material behaviour. The cross over point, where the tan delta is equal to 1 indicates the temperature at which the material starts to flow or where crystallisation/gelation starts to take place, depending on whether the material is heated up or cooled down.

Conventional hot melt adhesives cannot simultaneously meet the spray temperature, spray window, or flexibility requirements, at least in hygiene applications. There thus remains a need to provide a hot melt adhesive composition with improved flexibility (i.e. low brittleness or hardness), increased spray window, and lowered spray temperature, but which also has a fast set time and an acceptable T-peel strength. Such a hot melt adhesive composition would, for example, be particularly useful in producing a laminate, e.g. a laminate comprising various combinations of layers including but not limited to nonwoven layers, polyethylene layers, and/or polypropylene layers, for hygiene applications, but would also be suitable for use in packaging applications, mattress production, and the like.

Summary of the invention

*Hot melt adhesive composition*

According to the invention, there is provided a hot melt adhesive composition, the hot melt adhesive composition comprising, based on the total weight of the hot melt adhesive composition:

20 to 70 wt% of a polymer;
1 to 15 wt% of an additive comprising a hydrocarbon wax and, in addition to the hydrocarbon wax, an alcohol and/or a carboxylic acid, wherein the alcohol is a C9 to a C32 alcohol, and wherein the carboxylic acid is a C11 to a C32 carboxylic acid;
20 to 70 wt% of a resin; and
optionally an antioxidant and/or a processing oil.

In this specification, "wt%" is a shortened form of "weight percentage".
It will be appreciated that the additive may therefore comprise, in addition to the hydrocarbon wax -

the alcohol, or
the carboxylic acid, or
the alcohol and the carboxylic acid.

Preferably, the hot melt adhesive composition comprises from 30 to 60 wt% of the polymer, based on the total weight of the hot melt adhesive composition, i.e. based on the total combined weight of the polymer, additive, resin, and antioxidant and/or processing oil when included.
Preferably, the hot melt adhesive comprises from 3 to 15 wt% of the additive, based on the total weight of the hot melt adhesive composition. For example, the hot melt adhesive may comprise from 10% of the additive to 15% of the additive, such as 10% of the additive or 15% of the additive, based on the total weight of the hot melt adhesive composition.
Preferably, the hot melt adhesive composition comprises from of 25 to 67 wt% of the resin, based on the total weight of the hot melt adhesive composition.
The hot melt adhesive composition may comprise the antioxidant. In such a case, the hot melt adhesive composition may comprise from 0 to 5 wt% of the antioxidant, preferably from 0.1 to 2 wt% of the antioxidant, based on total weight of the hot melt adhesive composition.
The hot melt adhesive composition may comprise the processing oil. In such a case, the hot melt adhesive composition may comprise from 0 to 15 wt% of the processing oil, preferably from 5 to 15 wt% of the processing oil, based on the total weight of the hot melt adhesive composition.
The polymer may be a polyolefin polymer.
The polyolefin polymer may be selected from the group comprising amorphous poly-alpha-olefin (APAO) copolymers, olefinic homopolymers, and olefinic block copolymers. Preferably, polyolefin polymer is selected from the group comprising ethylene-propylene copolymers, and ethylene-butene copolymers.
The polyolefin polymer may be a single polyolefin polymer, or a mixture of polyolefin polymers.
The polyolefin polymer may have a Brookfield viscosity at 190° C measured according to ASTM D 3236 of from 1 500 to 20 000 mPa·s, preferably of from 1 500 to 7 570 mPa·s.

The polyolefin polymer may have a ring and ball softening point measured according to ASTM E 28 of between 90°C and 130°C.

The polyolefin polymer may have a density of from 0.8 to 0.9 g/cm$^3$.

The additive may comprise, based on the weight of the additive, from 99 to 30 wt% of the hydrocarbon wax and -

from 1 to 70 wt% of the alcohol, or
from 1 to 70 wt% of the of the carboxylic acid; or
from 1 to 70 wt% of the alcohol and the carboxylic acid combined.

Preferably, the additive comprises, based on the weight of the additive, from 99 to 40 wt% of the hydrocarbon wax and -

from 1 to 60 wt% of the alcohol, or
from 1 to 60 wt% of the carboxylic acid, or
from 1 to 60 wt% of the alcohol and the carboxylic acid combined.

The hydrocarbon wax may have a congealing point in a range of from 65°C to 115°C.

Preferably, the hydrocarbon wax has a congealing point in the range of from 80°C to 108°C.

The hydrocarbon wax may have a Brookfield viscosity at 135°C measured according to ASTM D 3236 of below 20 mPa·s.

The hydrocarbon wax may have a penetration at 25°C measured according to ASTM D 1321 of below 10 1/10 mm.

The hydrocarbon wax may have an oil content measured according to ASTM D 721 of below 1 wt%.

The hydrocarbon wax may be a hydrotreated hydrocarbon wax or a non-hydrotreated hydrocarbon wax.

The hydrocarbon wax may be a Fischer-Tropsch wax.

The hydrocarbon wax may therefore be a hydrotreated Fischer-Tropsch wax or a non-hydrotreated Fischer-Tropsch wax.

In a preferred embodiment of the invention, the hydrocarbon wax is one or more of the Fischer-Tropsch waxes commercially available from Sasol Chemicals, a division of Sasol South Africa Limited (50 Katherine Street, Sandton, South Africa), under the trade name SERATION.

Fischer-Tropsch waxes are obtained by Fischer-Tropsch synthesis. In the context of the invention, such waxes may be hydrocarbons that originate from cobalt- or iron-catalysed Fischer-Tropsch synthesis of synthesis gas (predominantly CO and H$_2$) to alkanes. The crude product of this synthesis (syncrude) is typically fractionated, e.g. via distillation, into separate liquid and solid fractions. The hydrocarbons obtained from Fischer-Tropsch synthesis contain predominantly linear alkanes, a low number of branched alkanes, and basically no cycloalkanes or impurities such as sulphur or nitrogen.

Fischer-Tropsch waxes consist of methylene units and their carbon chain length distribution is according to one embodiment characterized by an evenly increasing and decreasing number of molecules for the particular carbon atom chain lengths involved. This could be seen, for example, in a gas chromatography analysis of the Fischer-Tropsch wax.

The Fischer-Tropsch wax may have a content of branched hydrocarbons of from 10 to 25 wt%. The branched hydrocarbons of the Fischer-Tropsch wax may contain more than 10 wt%, more preferably more than 25 wt% hydrocarbons with methyl branches. The branched hydrocarbons of the Fischer-Tropsch wax may contain no quaternary carbon atoms. The absence of quaternary carbon atoms could be seen, for example, in an NMR-measurement of the Fischer-Tropsch wax.

The alcohol is a C9 to a C32 alcohol. Preferably, the alcohol may be a C16 to a C32 alcohol.

The alcohol may be a linear alcohol, a branched alcohol, or mixtures thereof.

The linear alcohol may be a linear primary alcohol. The branched alcohol may be a branched primary alcohol.

The branched alcohol may be a Guerbet alcohol.

In one embodiment of the invention, the alcohol is a mixture of predominantly C16 and C18 linear primary alcohols.

The carboxylic acid is a C11 to a C32 carboxylic acid, preferably the carboxylic acid may be a C18 to a C22 carboxylic acid.

The carboxylic acid may be a linear carboxylic acid, a branched carboxylic acid, or mixtures thereof.

The carboxylic acid may be a saturated carboxylic acid, an unsaturated carboxylic acid, or mixtures thereof.

Preferably, the carboxylic acid is a C18 to a C32 linear, saturated carboxylic acid.

The resin may be a tackifying agent.

The tackifying agent may be selected from the group comprising aromatic, aliphatic and cycloaliphatic hydrocarbon resins, mixed aromatic and aliphatic modified hydrocarbon resins, aromatic modified aliphatic hydrocarbon resins, and hydrogenated versions thereof; terpenes, modified terpenes and hydrogenated versions thereof; natural resins, modified resins, resin esters, and hydrogenated versions thereof; low molecular weight polylactic acid; and combinations thereof.

The processing oil may be selected from the group comprising mineral oils, naphthenic oils, paraffinic oils, aromatic oils, castor oils, rape seed oil, triglyceride oils, or combinations thereof. As a person skilled in the art would appreciate, processing oils may also include extender oils, which are commonly used in adhesives.

Where the hot melt adhesive composition comprises a processing oil, the processing oil typically modifies the rheology of the hot melt adhesive and imparts additional flexibility.

Processing oil is not suitable in all hot melt adhesive compositions, since there is a tendency for processing oils to migrate to the surface, leaving an oily residue. Typically, a processing oil is not suitable where the application of an article or product comprising a laminate produced using the adhesive composition of the invention may be negatively impacted by the presence of an oily residue thereon. This may be particularly relevant in applications in which the adhesive composition might, for example, come into direct contact with food, medical devices, delicate packaging, or hygiene products. Any migration of processing oils to the surface of such articles or products may negatively affect product quality and/or safety. For example, in hygiene products oily residues may cause skin irritation, which is undesirable.

In this specification, the terms "hygiene products" and "hygiene applications" mean products or applications relating to articles applied to, used on, or worn on, and that are in use therefore in contact with, the human body, for hygiene purposes, e.g. to collect or manage bodily fluids. For example, such articles may include, without limitation, diapers, adult incontinence devices, female hygiene articles such as absorbent pads, wound dressings, bed pads, industrial pads, and sanitary napkins.

The hot melt adhesive composition as hereinbefore described may be suitable for use in producing a laminate. By laminate is meant a layered construction comprising various combinations of layers, e.g. a single layer and a substrate or two or more layers, of materials, e.g. sheet materials, including but not limited to nonwoven layers, polyethylene polymer layers, and/or polypropylene polymer layers, at least some of which layers are adhered to each other by means of an adhesive composition.

The hot melt adhesive composition as hereinbefore described may be suitable for use in producing a laminate for hygiene applications, packaging applications, mattress production, and the like.

Preferably, the hot melt adhesive composition as hereinbefore described is suitable for use in producing a laminate for hygiene applications.

The hot melt adhesive composition may have a shear tan delta (G" / G') in the dynamic mechanical analysis is that is equal to 1 in the range of from 60°C to 100°C, preferably in the range of from 65°C to 85°C.

The hot melt adhesive composition may be sprayable at a temperature equal to or below 160°C, preferably at a temperature in the range of from 100°C to 160°C, more preferably at a temperature in the range of from 125°C to 145°C.

The inventive selection of the polymer, the resin, and the additive comprising the hydrocarbon wax, and the alcohol and/or the carboxylic acid, provides a superior hot melt adhesive for the use in producing laminates, having an excellent low temperature sprayability, high peel strength, fast set time, and excellent flexibility.

In one preferred embodiment of the invention, the hot melt adhesive composition comprises:

30 to 60 wt% of a propylene-ethylene based amorphous polyolefin polymer;
5 to 10 wt% of an additive comprising, more preferably essentially consisting of, a hydrocarbon wax and an alcohol;
30 to 60 wt% of a resin; and
0 to 2 wt% of an antioxidant;
wherein the additive comprises 20 to 60 wt% of the alcohol and 80 to 40 wt% of the hydrocarbon wax.

The propylene-ethylene based amorphous polyolefin polymer may, for example, be the polymer commercially available under the trade name AERAFIN 35.

The resin, the antioxidant, and the hydrocarbon wax may be as hereinbefore described.

Preferably, the alcohol is a mixture of predominantly C16 and C18 primary linear alcohols, or the alcohol is a branched alcohol. Where the alcohol is a branched alcohol, preferably the branched alcohol is a Guerbet alcohol, more preferably a C32 Guerbet alcohol.

In another preferred embodiment of the invention, the hot melt adhesive composition comprises:

30 to 60 wt% of a propylene-based olefin polymer;
5 to 10 wt% of an additive comprising, more preferably essentially consisting of, a hydrocarbon wax and an alcohol;
30 to 60 wt% of a resin; and
0 to 2 wt% of an antioxidant;
wherein the additive comprises 20 to 60 wt% of the alcohol and 80 to 40 wt% of the hydrocarbon wax.

The propylene-based olefin polymer may, for example, be the polymer commercially available under the trade name AERAFIN 17.

The resin, the antioxidant, and the hydrocarbon wax may be as hereinbefore described.

Preferably, the alcohol is a branched alcohol, or the alcohol is a mixture of predominantly C16 and C18 primary linear alcohols. Where the alcohol is a branched alcohol, preferably the branched alcohol is a Guerbet alcohol, more preferably a C32 Guerbet alcohol.

In another preferred embodiment of the invention, the hot melt adhesive composition comprises:

30 to 60 wt% of an isotactic propylene-based polymer;
5 to 10 wt% of an additive comprising, more preferably essentially consisting of, a hydrocarbon wax and a carboxylic acid;
30 to 60 wt% of a resin; and
0 to 2 wt% of an antioxidant;
wherein the additive comprises 30 to 60 wt% of the carboxylic acid and 70 to 40 wt% of the hydrocarbon wax.

The isotactic propylene-based polymer may, for example, be the polymer commercially available under the trade name VISTAMAXX.

The resin, the antioxidant, and the hydrocarbon wax may be as hereinbefore described.

Preferably, the carboxylic acid is a C18 carboxylic acid.

In another preferred embodiment of the invention, the additive comprises from 30 to 50 wt% of a linear alcohol and/or a linear carboxylic acid, and from 70 to 50 wt% of the hydrocarbon wax, more preferably 40 wt% of the linear alcohol and/or of the linear carboxylic acid, and 60 wt% of the hydrocarbon wax, based on the weight of the additive.

The polymer, the resin, the antioxidant, and the hydrocarbon wax may be as hereinbefore described.

The linear alcohol and/or the linear carboxylic acid may be further as hereinbefore described.

In another preferred embodiment of the invention, the additive comprises from 10 to 30 wt% of a branched alcohol and/or a branched carboxylic acid, and from 90 to 70 wt% of the hydrocarbon wax, more preferably 20 wt% of the branched alcohol and/or of the branched carboxylic acid, and 80 wt% of the hydrocarbon wax, based on the weight of the additive.

The polymer, the resin, the antioxidant, and the hydrocarbon wax may be as hereinbefore described.

The branched alcohol and the branched carboxylic acid may be further as hereinbefore described.

According to another aspect of the invention, there is provided a hot melt adhesive composition, the hot melt adhesive composition comprising:

20 to 70 wt% of a polymer;
1 to 15 wt% of an additive essentially consisting of an alcohol;
20 to 70 wt% of a resin; and
optionally an antioxidant and/or a processing oil.

The polymer, the alcohol, the resin, the antioxidant, and the processing oil may be as hereinbefore described.

*Method to produce a hot melt adhesive composition*

According to another aspect of the invention, there is provided a method to produce the hot melt adhesive composition as hereinbefore described, the method comprising:

mixing, in a molten state, a polymer, an additive, a resin, and optionally a processing oil and/or an antioxidant with each other in a heated mixer until they are homogenous, thereby to produce a molten hot melt adhesive composition; and
pelletising the molten hot melt adhesive composition, thereby to produce hot melt adhesive pellets.

The polymer, the additive, the resin, the processing oil, and the antioxidant may be as hereinbefore described.

Pelletising the molten hot melt adhesive composition may be accomplished by any suitable means known in the art, for example strand pelletizing, underwater pelletizing, or spray pelletizing.

*Method to produce a laminate*

According to another aspect of the invention, there is provided a method to produce a laminate, the method comprising:

providing a first layer and a second layer;

coating the first layer and/or the second layer with the hot melt adhesive composition as hereinbefore described;
arranging the first layer and the second layer such that the hot melt adhesive composition coating on the first layer and/or on the second layer is positioned between the first layer and the second layer; and
pressing the first layer and second layer together thereby to produce the laminate.

In this specification, the term "layer" may be construed as meaning a thickness of material, such as a sheet of material.

The first layer may be a nonwoven layer or a polymer layer. The second layer may be a nonwoven layer or a polymer layer.

The polymer layer may be a polyethylene polymer layer, a polypropylene polymer layer, or a combination thereof.

Where the first layer and/or the second layer is a nonwoven layer, the laminate may be known as a nonwoven laminate.

The coating may be performed by means of spray coating, die slot coating, or other suitable coating means. Preferably, the coating is applied by means of spray coating, more preferably by means of spiral spray coating, such that the coating of the hot melt adhesive composition on the first layer and/or on the second layer is in a spiral spray pattern.

The spray coating may be performed at a temperature equal to or below 160°C, preferably at a temperature in the range of from 100°C to 160°C, more preferably at a temperature in the range of from 125°C to 145°C.

The spray coating may be applied to the first layer and/or to the second layer with a coating weight of from 1 to 4 g/m$^2$, preferably with a coating weight of 2 g/m$^2$.

The spray coating may be applied with a nozzle air pressure of from 0.005 to 0.05 MPa.

Pressing the first layer and the second layer together may include feeding the first layer and second layer between two rollers, thus pressing the layers together. The rollers may be pneumatic rollers.

The method may further include reeling the laminate onto a roll for cooling and storage.

In a preferred embodiment of the method, the first layer is a nonwoven layer and the second layer is a polymer layer, such that a nonwoven laminate is produced. Preferably, the polymer layer is a polyethylene polymer layer.

*Laminate and use thereof*

According to another aspect of the invention, there is provided a laminate produced using, and thus comprising, the hot melt adhesive composition as hereinbefore described, the laminate optionally having been produced according to the method of the invention to produce a laminate.

The laminate may comprise at least one nonwoven layer. Preferably, the laminate comprises at least one nonwoven layer and one polymer layer. That is, the laminate is a nonwoven laminate.

Preferably, the polymer layer is a polyethylene polymer layer.

The laminate may have a flexibility measured according to the Flexibility Method described below which is less than or equal to 1400 N/m.

The laminate may be used in hygiene applications, in packaging applications, and/or in mattress manufacture.

Thus, according to another aspect of the invention, there is provided the use of a laminate as hereinbefore described in hygiene applications, in packaging applications, and/or in mattress manufacture in adhering two or more layers or materials together.

Preferably, the laminate is used in hygiene applications.

*Use of the hot melt adhesive*

According to a further aspect of the invention, there is provided the use of a hot melt adhesive composition as hereinbefore described as an adhesive for a laminate.

Measurement Methods

The following methods were applied in the examples and, where applicable, were applied in characterising the components of the composition of the invention, and the composition of the invention.

All congealing points were measured according to ASTM D 938, and all ring and ball softening points for the polymers were measured according to ASTM E 28.

The Brookfield viscosity of the polymers at 190°C, for the hot melt adhesive compositions at 140°C and 160°C, and for the hydrocarbon waxes at 135°C were measured according to ASTM D 3236 with a #27 spindle on a Brookfield DV-II+ Pro Extra viscometer with a Thermosel®.

The viscosity for the hydrocarbon waxes with a value below 15 mPa·s was measured according to ASTM D 445.

The needle penetration of the hydrocarbon wax at 25°C was measured according to ASTM D 1321, and the penetration of the polymers was measured according to ASTM D 5 or ASTM D 2240 (durometer hardness).

The glass transition point ($T_g$) of the polymers was measured according to ASTM D 3418.

The oil content of the hydrocarbon waxes was measured according to ASTM D 721.

The molar mass (number average) and the iso-alkane content of the hydrocarbon waxes were determined by gas chromatography according to EWF Method 001/03 of the European Wax Federation.

The T-peel strength ("T-peel") of the hot melt adhesive compositions was measured in according to ASTM D 1876. The prepared samples were tested, after an hour, for their T-peel strength using an Instron 3366-B16875. The T-peel strength of each sample was determined by preparing five strips of 25 mm by 250 mm each. The sample strips were pulled apart with a rate of 300 mm/min using a 100 N load cell to give a T-peel result in g/inch.

*Flexibility Method*

The flexibility of the samples was tested according to the Flexibility Method using an Instron 3366-B16875, as follows: Each sample was cast on a silicon mould to prepare 10 mm × 50 mm specimens of 3 mm thickness. The samples were compressed and returned by 4 mm at a rate of 10 mm/min using a 10 kN load cell to determine the flexural moduli. The small thickness deviations on the adhesive samples were addressed by a correction of the force values to conform to that of a 3 mm thickness stave. The force constant of the flexural modulus was used to evaluate the flexibility. Four specimens of each adhesive composition were tested, and an average value for flexibility (N/m) was determined across all four specimens.

The loss area is the area between the flexural modulus curve when a load is applied and the flexural modulus curve after the load is removed. The smaller this area the more the sample has the tendency to return to its original position after deformation. The bigger this area the less the sample has the tendency to return to its original position after deformation. This ability, known as a sample's elasticity, is therefore an indication of the sample's ability to resist deformation. The loss area (%) is calculated as the difference in area between two flexural modulus areas, as a percentage of the larger area.

The interquartile range (IQR) was used to evaluate the sprayability of the hot melt adhesive compositions. A sprayability factor was determined by IQR/T-peel. Through experimentation it was found that a sprayability factor below 0.45 leads to consistent spray patterns, when T-peel is above 30.

Spray window is an indication of the robustness of an adhesive, and is effectively the temperature range over which an adhesive is sprayable with minimal variation in T-peel distribution and minimised IQR/T-peel (sprayability factor).

For the purposes of this specification, the following definitions apply:

(i) minimum spray temperature is the lowest temperature at which a hot melt adhesive composition is sprayable with a sprayability factor equal to or below 0.45;

(ii) maximum spray temperature is the highest temperature at which a hot melt adhesive composition is sprayable with a sprayability factor equal to or below 0.45;

(iii) spray window is the difference between the maximum spray temperature and the minimum spray temperature; and

(iv) optimal spray temperature is the temperature at which a hot melt adhesive composition is sprayable with the sprayability factor at its lowest.

G' and G" were determined according to the DMA parallel plate method. Measurements were made using an Anton Paar MCR 502 rheometer with H-PTD 200 hood and P-PTD 200 lower plate. A 25 mm parallel plate measuring system was used, and the samples were run from 120°C to -30°C with an amplitude strain of 0.015%, frequency of 10 Hz, and a cooling rate of 2°C/min. The sample thickness was 2 mm. The G' & G" cross-over point was determined by plotting graphs of the G' and G" values on the same set of axes (i.e. overlaying the G' & G" trends) and measuring the point where the trends of G' and G" cross each other.

Examples

The publicly available physical property data of various commercially available polymers used in hot melt adhesive compositions (HMA) is shown in Tables 1a & 1b.

L-MODU S410 is a polypropylene homopolymer, Vistamaxx 8380 is primarily composed of isotactic propylene repeat units with random ethylene distribution, Koattro PB M 1500M is a random copolymer of 1-butene with high ethylene content, Solutack 6810 is an ethylene 1-octene copolymer, Aerafin 17 and Aerafin 35 are propylene-based olefin polymers, Rextac RT 2788 is an amorphous poly alpha olefin-based polymer on copolymers of butene-1 and propylene, and Infuse 9807 is an olefin block copolymer.

Table 1a: Physical property data of commercially available polymers

| Property | L-MODU S410 | Vistamaxx 8380 | Koattro PB M 1500M | Solutack 6810 |
|---|---|---|---|---|
| Supplier | Idemitsu | ExxonMobil | Lyondell Basell | SK Global |
| Brookfield viscosity @190°C [mPa·s] ASTM D 3236 | 8500 (Idemitsu method) | 7570* | 5600 | 8200 @ 177°C |
| R&B softening point [°C] ASTM E 28 | 89 (ISO 4625) | 100 | n.d. | - |
| Density [g/cm³] | 0.870 | 0.864 | 0.89 | 0.868 |
| Ethylene-content [wt%] | - | 12 | - | - |
| Penetration [dmm] ASTM D 5 | - | 18 ASTM D 2240 | - | - |
| Tg [°C] ASTM D 3418 | - | -31 | -30 | -65 |

Table 1b: Physical property data of commercially available polymers

| Property | Aerafin 35 | Aerafin 17 | Infuse 9807 | Rextac RT 2788 |
|---|---|---|---|---|
| Supplier | Eastman | Eastman | Dow | Rextac |
| Brookfield viscosity @190° C [mPa·s] ASTM D 3236 | 3300 | 1700 | * | 8500 |
| R&B softening point [°C] ASTM E 28 | 120 | 130 | - | 118 |
| Density [g/cm³] | - | 0.86 | 0.87 | 0.85-0.88 |
| Ethylene-content [wt%] | - | 16-21 | - | |
| Penetration [dmm] ASTM D 5 | 14 | 20 | - | <10 |
| Tg [°C] ASTM D 3418 | -40 | -38 | - | -23 |

* proprietary methods (not comparable data)

The hydrocarbon wax used in the HMA compositions was a Fischer-Tropsch wax commercially available from Sasol under the trade name SERATION 1820. The physical property data of SERATION 1820 hydrocarbon wax is shown in Table 2.

Table 2: Physical property data of SERATION 1820 hydrocarbon wax

| Property | SERATION 1820 |
|---|---|
| Congealing point [° C]<br>ASTM D 938 | 97 |
| Brookfield Viscosity @135° [mPa.s]<br>ASTM D 3236 with spindle 27 | 8 |
| Density @ 120°C [g/cm³] | 0.763 |
| Penetration @ 25°C [1/10 mm]<br>ASTM D 1321 | 1 |
| Oil content [wt%]<br>ASTM D 721 | 0.8 |
| Molar mass (number average)<br>[g/mol] | 780 |
| Iso-alkanes [wt%] | 5.7 |

The commercially available polymers (Table 1) were formulated into various inventive HMA compositions comprising:

(i) a polymer; and
(ii) a tackifier resin as tackifying agent; and
(iii) an additive comprising a hydrocarbon wax and either an alcohol or a carboxylic acid; and
(iv) an antioxidant; and
(v) optionally a processing oil.

Similarly, the commercially available polymers (Table 1) were formulated into various comparative HMA compositions comprising:

(i) a polymer; and
(ii) a tackifier resin as tackifying agent; and
(iii) an additive comprising hydrocarbon wax alone or alcohol alone; and
(iv) an antioxidant; and
(v) optionally a processing oil.

The HMA compositions were all prepared using a shear mixing vessel at a temperature of 150°C.
The tackifier resin used in the HMA compositions was Regalite R1090 which is commercially available from Eastman.
The anti-oxidant used in the HMA compositions was Irganox 1010 which is commercially available from BASF. The anti-oxidant was added to the hot melt adhesive formulations to improve their stability at higher processing temperatures, since higher processing temperatures can cause breakdown of some polymers and other components in the formulations, leading to a reduction in adhesive performance over time. Thus, although anti-oxidants are not necessary in formulating functional hot melt adhesives, it is common practice to include anti-oxidants to mitigate high temperature degeneration.
The processing oil used was NYFLEX 3100, which is a hydrotreated, highly refined, high viscosity naphthenic oil commercially available from Nynas AB.
Various linear and branched alcohols and linear and branched carboxylic acids were used in the HMA compositions.
ISOCARB 12 is a C12 Guerbet acid (2-butyl-octanoic acid) commercially available from Sasol. ISOCARB 12 is derived from the corresponding C12 Guerbet alcohol ISOFOL12 (2-butyl-1-octanol) also commercially available from Sasol.

Stearic acid is a C18 carboxylic acid with the IUPAC name octadecanoic acid.

Erucic acid is a C22 monounsaturated omega-9 carboxylic acid also known as *cis*-13-docosenoic acid.

ISOCARB 24 is a C24 Guerbet acid (2-decyl-tetradecanoic acid) commercially available from Sasol. ISOCARB 24 is derived from the corresponding C24 Guerbet alcohol ISOFOL24.

NAFOL 1618H is a mixture of C16-C18 linear primary alcohols commercially available from Sasol.

ALFOL20+ is a blend of C20+ linear primary alcohols with even-numbered carbon chain lengths which is commercially available from Sasol.

ISOFOL 32 is a C32 Guerbet alcohol (2-tetradecyl-1-octadecanol) commercially available form Sasol.

The HMA compositions for each polymer are shown in Tables 3a to 3h.

Table 3a: Vistamaxx HMA compositions (wt%)

| | Composition | 1 | 2 | 3 | 4 | 5 | 6 | 7 | 8 | 9 | 10 | 11 | 12 | 13 |
|---|---|---|---|---|---|---|---|---|---|---|---|---|---|---|
| Polymer | Vistamaxx 8310 | 60 | 60 | 60 | 60 | 60 | 60 | 50 | 50 | 60 | 60 | 60 | 60 | 60 |
| Tackifier resin | Regalite R1090 | 30 | 30 | 30 | 30 | 30 | 30 | 43 | 43 | 33 | 33 | 33 | 33 | 33 |
| Additive | SERATION 1820 | 10 | 5 | 9 | 7.5 | 9 | 7.5 | 4.2 | 4.55 | 4.2 | 4.2 | 4.2 | 5.6 | 4.2 |
| | Stearic Acid | | 5 | | | | | 2.8 | 2.45 | | 2.8 | | | |
| | Erucic Acid | | | | | | | | | 2.8 | | | | |
| | ISOCARB 24 | | | | | | 2.5 | | | | | | | |
| | NAFOL 1618H | | | 1 | | | | | | | | 2.8 | | |
| | ALFOL20+ | | | | | | | | | | | | | 2.8 |
| | ISOFOL 32 | | | | 2.5 | 1 | | | | | | | 1.4 | |
| Antioxidant | Irganox 1010 | 0.2 | 0.2 | 0.2 | 0.2 | 0.2 | 0.2 | 0.2 | 0.2 | 0.2 | 0.2 | 0.2 | 0.2 | 0.2 |

Table 3b: Aerafin 17 HMA compositions (wt%)

| | Composition | 14 | 15 | 16 | 17 | 18 | 19 | 20 | 21 |
|---|---|---|---|---|---|---|---|---|---|
| Polymer | Aerafin 17 | 60 | 60 | 60 | 60 | 60 | 60 | 60 | 60 |
| Tackifier resin | Regalite R1090 | 30 | 30 | 30 | 30 | 33 | 33 | 33 | 33 |
| Additive | SERATION 1820 | 10 | 5 | 7.5 | 7.5 | 4.2 | 4.2 | 5.6 | 4.2 |
| | Stearic Acid | | 5 | | | 2.8 | | | |
| | ISOCARB 24 | | | | 2.5 | | | | |
| | NAFOL 1618H | | | | | | 2.8 | | |
| | ISOFOL 32 | | | 2.5 | | | | 1.4 | |
| | ALFOL20+ | | | | | | | | 2.8 |
| Antioxidant | Irganox 1010 | 0.2 | 0.2 | 0.2 | 0.2 | 0.2 | 0.2 | 0.2 | 0.2 |

### Table 3c: Aerafin 35 HMA compositions (wt%)

| | Composition | 22 | 23 | 24 | 25 | 26 |
|---|---|---|---|---|---|---|
| Polymer | Aerafin 35 | 60 | 60 | 60 | 60 | 60 |
| Tackifier resin | Regalite R1090 | 30 | 33 | 33 | 33 | 33 |
| Additive | SERATION 1820 | 10 | 4.2 | 4.2 | 5.6 | 4.2 |
| | Stearic Acid | | 2.8 | | | |
| | NAFOL 1618H | | | 2.8 | | |
| | ALFOL20+ | | | | | 2.8 |
| | ISOFOL 32 | | | | 1.4 | |
| Antioxidant | Irganox 1010 | 0.2 | 0.2 | 0.2 | 0.2 | 0.2 |

### Table 3d: L-MODU S410 HMA compositions (wt%)

| | Composition | 27 | 28 |
|---|---|---|---|
| Polymer | L-MODU S410 | 60 | 60 |
| Tackifier resin | Regalite R1090 | 30 | 30 |
| Additive | SERATION 1820 | 10 | 5 |
| | Stearic Acid | | 5 |
| Antioxidant | Irganox 1010 | 0.2 | 0.2 |

### Table 3e: Koattro PB M 1500M HMA compositions (wt%)

| | Composition | 29 | 30 | 31 | 32 | 33 | 34 | 35 | 36 |
|---|---|---|---|---|---|---|---|---|---|
| Polymer | Koattro PB M 1500M | 60 | 60 | 60 | 60 | 60 | 60 | 60 | 60 |
| Tackifier resin | Regalite R1090 | 30 | 30 | 30 | 30 | 30 | 30 | 30 | 30 |
| Additive | SERATION 1820 | 10 | 5 | 5 | 7.5 | 5 | 7.5 | 5 | 7.5 |
| | Stearic Acid | | 5 | | | | | | |
| | ISOCARB 12 | | | | | 5 | 2.5 | | |
| | ISOCARB 24 | | | | | | | 5 | 2.5 |
| | ISOFOL 32 | | | 5 | 2.5 | | | | |
| Antioxidant | Irganox 1010 | 0.2 | 0.2 | 0.2 | 0.2 | 0.2 | 0.2 | 0.2 | 0.2 |

### Table 3f: Solutack 6810 HMA compositions (wt%)

| Composition | | 37 | 38 |
|---|---|---|---|
| Polymer | Solutack 6810 | 60 | 60 |
| Tackifier resin | Regalite R1090 | 30 | 30 |
| Additive | SERATION 1820 | 10 | 5 |
| | Stearic Acid | | 5 |
| Antioxidant | Irganox 1010 | 0.2 | 0.2 |

### Table 3g: Rextac RT 2788 HMA compositions (wt%)

| Composition | | 39 | 40 | 41 | 42 | 43 | 44 | 45 | 46 | 47 | 48 |
|---|---|---|---|---|---|---|---|---|---|---|---|
| Polymer | Rextac 2788 | 55 | 55 | 55 | 55 | 30 | 30 | 30 | 30 | 30 | 30 |
| Tackifier resin | Regalite R1090 | 30 | 30 | 30 | 30 | 55 | 55 | 55 | 55 | 55 | 55 |
| Additive | SERATION 1820 | 15 | 9 | 9 | 12 | 15 | 9 | 12 | | | |
| | Stearic Acid | | 6 | | | | | | | | |
| | NAFOL 1618H | | | 6 | | | 6 | | 15 | | |
| | ISOFOL 32 | | | | 3 | | | 3 | | 15 | |
| Processing oil | Nyflex 3100 | | | | | | | | | | 15 |
| Antioxidant | Irganox 1010 | 0.2 | 0.2 | 0.2 | 0.2 | 0.2 | 0.2 | 0.2 | 0.2 | 0.2 | 0.2 |

### Table 3h: Infuse 9807 HMA compositions (wt%)

| Composition | | 49 | 50 | 51 | 52 | 53 |
|---|---|---|---|---|---|---|
| Polymer | Infuse 9807 | 60 | 60 | 20 | 20 | 20 |
| Tackifier Resin | Regalite R1090 | 30 | 30 | 60 | 60 | 60 |
| Additive | SERATION 1820 | 10 | 5 | 20 | 12 | 16 |
| | Stearic Acid | | 5 | | | |
| | NAFOL 1618H | | | | 8 | |
| | ISOFOL 32 | | | | | 4 |
| Antioxidant | Irganox 1010 | 0.2 | 0.2 | 0.2 | 0.2 | 0.2 |

Results

Each HMA composition was evaluated for:

(i) spray window, minimal spray temperature, and optimal spray temperature;
(ii) T-peel strength (at 1h, 24h, and 2 weeks);
(iii) Flexibility (force constant); and
(iv) G' & G" cross-over point.

The results of the evaluation of each of the hot melt adhesive compositions are presented in Table 4.

## Table 4: Results of HMA composition evaluations

| Form. No. | Spray window | Min. spray temp. | Optimal spray temp. | T-peel strength 1hr | T-peel strength 24hr | T-peel strength 2wks | Flexibility (force constant) | Loss area | G' & G" cross-over point |
|---|---|---|---|---|---|---|---|---|---|
| | (°C) | (°C) | (°C) | (g/inch) | (g/inch) | (g/inch) | (N/m) | (%) | (°C) |
| 1 (comp.) | 0 | 145 | 145 | 72 | 72 | 70 | 1769 | | 90 |
| 2 | | | 145 | 66 | | | 1386 | | |
| 3 | | | | | | | 1529 | 95 | |
| 4 | 15 | 135 | 145 | 49 | 57 | | 1170 | 91 | |
| 5 | 5 | 145 | 150 | 51 | | | 1701 | 96 | |
| 6 | 15 | 135 | 135 | 42 | 46 | | 1106 | 87 | |
| 7 | 20 | 135 | 155 | 52 | | | | | |
| 8 | 15 | 135 | 135 | 58 | | | | | |
| 9 | 10 | 145 | 155 | 67 | 70 | | 809 | 81 | |
| 10 | 15 | 140 | 140 | 58 | 65 | | 833 | | 72 |
| 11 | 15 | 140 | 140 | 48 | 49 (4 d) | | 736 | | 88 |
| 12 | 20 | 135 | 140 | 47 | 48 | | 1127 | | 89 |
| 13 | 5 | 150 | 155 | 59 | 60 | | 617 | 81 | |
| 14 (comp.) | 20 | 130 | 150 | 36 | 34 | 26 | 1794 | 66 | 90 |
| 15 | 15 | 135 | 145 | 37 | 45 | 43 | 1002 | | |
| 16 | 20 | 130 | 130 | | 39 | 46 (1 wk) | 822 | | |

| Form. No. | Spray window | Min. spray temp. | Optimal spray temp. | T-peel strength 1hr | T-peel strength 24hr | T-peel strength 2wks | Flexibility (force constant) | Loss area | G' & G" cross-over point |
|---|---|---|---|---|---|---|---|---|---|
| | (°C) | (°C) | (°C) | (g/inch) | (g/inch) | (g/inch) | (N/m) | (%) | (°C) |
| 17 | 15 | 135 | 150 | | 58 | 58 (1 wk) | 1227 | | |
| 18 | 15 | 140 | 140 | 56 | 51 | | 627 | 82 | 90 |
| 19 | 15 | 140 | 145 | 37 | 41 (3 d) | | 597 | | 87 |
| 20 | >20 | <135 | 135 | 44 | | 45 | 915 | | 87 |
| 21 | 10 | 145 | 145 | 56 | | | 324 | 64 | |
| 22 (comp.) | 5 | 145 | 150 | 64 | 64 | | 1449 | | 81 |
| 23 | 15 | 140 | 145 | 48 | 45 | | 595 | | 80 |
| 24 | 10 | 145 | 145 | 67 | 71 (74, 3 d) | | 704 | 69 | 81 |
| 25 | 15 | 140 | 145 | | 71 | | 953 | 77 | 81 |
| 26 | 10 | 145 | 145 | 56 | | | 519 | 73 | |
| 27 (comp.) | 0 | 145 | 145 | 43 | 37 | | 2296 | | |
| 28 | 15 | 135 | 150 | 73 | 72 | | 1669 | | |
| 29 (comp.) | 0 | 145 | 145 | 51 | 38 | 44 | 1487 | | |
| 30 | 15 | 130 | 130 | 52 | 49 | 33 | 1215 | | |
| 31 | 15 | 135 | 140 | | 70 | 99 (1 wk) | 562 | 95 | |
| 32 | 10 | 140 | 150 | | 78 | | 936 | 90 | |
| 33 | | | | | | | 713 | 89 | |
| 34 | | | | | | | 1139 | 93 | |
| 35 | 15 | 135 | 150 | 44 | 47 | 55 | 352 | 89 | |
| 36 | 15 | 135 | 140 | 62 | | 81 (1 wk) | 640 | 86 | |
| 37 (comp.) | 15 | 140 | 155 | 49 | 48 | 39 | 523 | | |
| 38 | 10 | 140 | 150 | 45 | 41 | 41 | 406 | | |
| 39 (comp.) | n/d | n/d | n/d | n/d | n/d | | 3623 | 78 | 93 |
| 40 | 0 | 155 | 155 | 82 | | | - | | 85 |
| 41 | 0 | 160 | 160 | - | 99 | | 1981 | 81 | 83 |
| 42 | 5 | 155 | 155 | - | 83 | | 2000 | 86 | 89 |
| 43 (comp.) | - | 165 | - | - | - | | 4723 | 81 | |
| 44 | 10 | 150 | 155 | 54 | 37 | | 2011 | | |
| 45 | 5 | 155 | 160 | 65 | - | | 1493 | | |
| 46 | 0 | 160 | 160 | - | 60 | | 1849 | 88 | |
| 47 | 0 | 160 | 160 | - | 65 | | 355 | 83 | |
| 48 | 0 | 160 | 160 | - | 87 | | 365 | 83 | |

| Form. No. | Spray window | Min. spray temp. | Optimal spray temp. | T-peel strength 1hr | T-peel strength 24hr | T-peel strength 2wks | Flexibility (force constant) | Loss area | G' & G" cross-over point |
|---|---|---|---|---|---|---|---|---|---|
| | (°C) | (°C) | (°C) | (g/inch) | (g/inch) | (g/inch) | (N/m) | (%) | (°C) |
| 49 (comp.) | Not sprayable | | | | | | 334 | | |
| 50 | Not sprayable | | | | | | 334 | | |
| 51 (comp.) | | | 145 | 64 | 53 | | 2758 | 70 | |
| 52 (comp.) | 15 | 145 | 150 | 42 | 36 | | 1051 | 75 | |
| 53 (comp.) | | | | | | | 1227 | 73 | |

(comp.) = comparative example; n/d = not determined

Hydrocarbon waxes act as effective nucleating agents and therefore increase the crystalline portion of hot melt adhesive compositions. The increase in crystallinity occurs rapidly and is obtained within the first hour after coating. Although there is a strength build-up observed in hot melt adhesive compositions comprising hydrocarbon waxes, the stiffness associated with this increased strength as shown by the comparative examples is not desirable, especially in hygiene or personal care applications.

The additive comprising the hydrocarbon wax, and the alcohol and/or the carboxylic acid in the hot melt adhesive composition of the present invention acts as a crystallinity disruptor which results in a less stiff and more flexible hot melt adhesive composition without sacrificing adhesive strength, while at the same time maintaining a fast set time, as shown in the inventive examples.

Overall, the results indicate that the hot melt adhesive composition of the invention is a robust composition. In particular, the results demonstrate that hot melt adhesive compositions of the present invention show one or more of an increase in spray window, a reduced optimal spray temperature, a fast set time, and vastly improved flexibility, compared to the comparative compositions. T-peel strength is high and stable over time, with optimal adhesive strength obtainable within 1 hour.

The hot melt adhesive composition according to the present invention thus increases formulative freedom and is well suited to use in applications such as hygiene and personal care, but is also suitable for applications such as packaging and mattress production.

**Claims**

1. A hot melt adhesive composition, the hot melt adhesive composition comprising, based on the total weight of the hot melt adhesive composition:

    20 to 70 wt% of a polymer;
    1 to 15 wt% of an additive comprising a hydrocarbon wax and, in addition to the hydrocarbon wax, an alcohol and/or a carboxylic acid, wherein the alcohol is a C9 to a C32 alcohol, and wherein the carboxylic acid is a C11 to a C32 carboxylic acid;
    20 to 70 wt% of a resin; and
    optionally an antioxidant and/or a processing oil.

2. The hot melt adhesive composition according to claim 1, wherein the hot melt adhesive composition comprises from 30 to 60 wt% of the polymer, based on the total weight of the hot melt adhesive composition.

3. The hot melt adhesive composition according to claim 1 or claim 2, wherein the hot melt adhesive comprises from 3 to 15 wt% of the additive, based on the total weight of the hot melt adhesive composition.

4. The hot melt adhesive composition according to any one of claims 1 to 3, wherein the hot melt adhesive composition comprises from of 25 to 67 wt% of the resin, based on the total weight of the hot melt adhesive composition.

5. The hot melt adhesive composition according to any one of claims 1 to 4, wherein the polymer is a polyolefin polymer, , preferably wherein the polyolefin polymer is an amorphous poly-alpha-olefin (APAO) copolymer, an olefinic homopolymer, or an olefinic block copolymer.

6. The hot melt adhesive composition according to claim 5, wherein the olefinic block copolymer is an ethylene-propylene copolymer, or an ethylene-butene copolymer.

7. The hot melt adhesive composition according to claim 5 or claim 6, wherein, the polyolefin polymer has one or more of the following properties:

   a Brookfield viscosity at 190° C measured according to ASTM D 3236 of from 1 500 to 20 000 mPa·s, preferably of from 1 500 to 7 570 mPa·s;
   a ring and ball softening point measured according to ASTM E 28 of between 90°C and 130°C; and
   a density of from 0.8 to 0.9 g/cm$^3$.

8. The hot melt adhesive composition according to any one of claims 1 to 7, wherein the additive comprises, based on the weight of the additive, from 99 to 30 wt% of the hydrocarbon wax and -

   from 1 to 70 wt% of the alcohol, or
   from 1 to 70 wt% of the of the carboxylic acid; or
   from 1 to 70 wt% of the alcohol and the carboxylic acid combined.

9. The hot melt adhesive composition according to any one of claims 1 to 8, wherein the hydrocarbon wax has a congealing point in a range of from 65°C to 115°C, preferably in the range of from 80°C to 108°C.

10. The hot melt adhesive composition according to any one of claims 1 to 9, wherein the hydrocarbon wax has one or more of the following properties:

    a Brookfield viscosity at 135°C measured according to ASTM D 3236 of below 20 mPa·s;
    a penetration at 25°C measured according to ASTM D 1321 of below 10 1/10 mm; and
    an oil content measured according to ASTM D 721 of below 1 wt%.

11. The hot melt adhesive composition according to any one of claims 1 to 10, wherein the hydrocarbon wax is a Fischer-Tropsch wax.

12. The hot melt adhesive composition according to any one of claims 1 to 11, wherein the alcohol is a C16 to a C32 alcohol, and wherein the carboxylic acid is a C18 to a C22 carboxylic acid.

13. The hot melt adhesive composition according to any one of claims 1 to 12, wherein the hot melt adhesive composition has a shear tan delta (G" / G') in the dynamic mechanical analysis that is equal to 1 in the range of from 60°C to 100°C, preferably in the range of from 65°C to 85°C.

14. The hot melt adhesive composition according to any one of claims 1 to 13, wherein the hot melt adhesive composition is sprayable at a temperature equal to or below 160°C, preferably at a temperature in the range of from 100°C to 160°C, more preferably at a temperature in the range of from 125°C to 145°C.

15. A method to produce the hot melt adhesive composition as claimed in any one of claims 1 to 14, the method comprising:

    mixing, in a molten state, a polymer, an additive, a resin, and optionally a processing oil and/or an antioxidant with each other in a heated mixer until they are homogenous, thereby to produce a molten hot melt adhesive composition; and
    pelletising the molten hot melt adhesive composition, thereby to produce hot melt adhesive pellets.

16. A method to produce a laminate, the method comprising:

    providing a first layer and a second layer;
    coating the first layer and/or the second layer with the hot melt adhesive composition as claimed in any one of claims 1 to 14;
arranging the first layer and the second layer such that the hot melt adhesive composition coating on the first layer and/or on the second layer is positioned between the first layer and the second layer; and
pressing the first layer and second layer together thereby to produce the laminate.

17. The method according to claim 16, wherein the first layer is a nonwoven layer or a polymer layer, and the second layer is a nonwoven layer or a polymer layer, and when the first layer and/or the second layer is/are a polymer layer/s, wherein the polymer layer is a polyethylene polymer layer, a polypropylene polymer layer, or a combination thereof.

18. A laminate produced using, and thus comprising, the hot melt adhesive composition according to any one of claims 1 to 14.

19. The laminate according to claim 18, wherein the laminate comprises at least one nonwoven layer, preferably at least one nonwoven layer and one polymer layer, and wherein the polymer layer is a polyethylene polymer layer.

20. The use of a laminate according to claim 18 or claim 19 in hygiene applications, in packaging applications, and/or in mattress manufacture.

**Patentansprüche**

1. Heißschmelzklebezusammensetzung, wobei die Heißschmelzklebezusammensetzung, basierend auf dem Gesamtgewicht der Heißschmelzklebezusammensetzung, umfasst:

   20 bis 70 Gew.-% eines Polymers;
   1 bis 15 Gew.-% eines Additivs, das ein Kohlenwasserstoffwachs und, zusätzlich zu dem Kohlenwasserstoffwachs, einen Alkohol und/oder eine Carbonsäure umfasst, worin der Alkohol ein C9- bis C32-Alkohl ist und worin die Carbonsäure eine C11- bis C32-Carbonsäure ist;
   20 bis 70 Gew.-% eines Harzes; und
   gegebenenfalls ein Antioxidans und/oder ein Verarbeitungsöl.

2. Heißschmelzklebezusammensetzung gemäß Anspruch 1, worin die Heißschmelzklebezusammensetzung 30 bis 60 Gew.-% des Polymers, basierend auf dem Gesamtgewicht der Heißschmelzklebezusammensetzung, umfasst.

3. Heißschmelzklebezusammensetzung gemäß Anspruch 1 oder Anspruch 2, worin die Heißschmelzklebezusammensetzung 3 bis 15 Gew.-% des Additivs, basierend auf dem Gesamtgewicht der Heißschmelzklebezusammensetzung, umfasst.

4. Heißschmelzklebezusammensetzung gemäß einem der Ansprüche 1 bis 3, worin die Heißschmelzklebezusammensetzung 25 bis 67 Gew.-% des Harzes, basierend auf dem Gesamtgewicht der Heißschmelzklebezusammensetzung, umfasst.

5. Heißschmelzklebezusammensetzung gemäß einem der Ansprüche 1 bis 4, worin das Polymer ein Polyolefinpolymer ist, worin das Polyolefinpolymer vorzugsweise ein amorphes Poly-alpha-Olefin(APAO)-Copolymer, ein olefinisches Homopolymer oder ein olefinisches Blockcopolymer ist.

6. Heißschmelzklebezusammensetzung gemäß Anspruch 5, worin das olefinische Blockcopolymer ein Ethylen-Propylen-Copolymer oder ein Ethylen-Buten-Copolymer ist.

7. Heißschmelzklebezusammensetzung gemäß Anspruch 5 oder Anspruch 6, worin das Polyolefinpolymer eine oder mehrere der folgenden Eigenschaften aufweist:

   eine bei 190 °C gemäß ASTM D 3236 gemessene Brookfield-Viskosität von 1.500 bis 20.000 mPa·s, vorzugsweise 1.500 bis 7.570 mPa·s;
   ein nach ASTM E 28 gemessener Ring-und-Kugel-Erweichungspunkt zwischen 90 °C und 130 °C; und
   eine Dichte von 0,8 bis 0,9 g/cm$^3$.

8. Heißschmelzklebezusammensetzung gemäß einem der Ansprüche 1 bis 7, worin das Additiv, basierend auf dem Gewicht des Additivs 99 bis 30 Gew.-% des Kohlenwasserstoffwachses und -

> 1 bis 70 Gew.-% des Alkohols oder
> 1 bis 70 Gew.-% der Carbonsäure oder
> 1 bis 70 Gew.-% des Alkohols und der Carbonsäure zusammen umfasst.

9. Heißschmelzklebezusammensetzung gemäß einem der Ansprüche 1 bis 8, worin das Kohlenwasserstoffwachs einen Erstarrungspunkt im Bereich von 65 °C bis 115 °C, vorzugsweise im Bereich von 80 °C bis 108 °C, aufweist.

10. Heißschmelzklebezusammensetzung gemäß einem der Ansprüche 1 bis 9, worin das Kohlenwasserstoffwachs eine oder mehrere der folgenden Eigenschaften aufweist:

> eine bei 135 °C gemäß ASTM D 3236 gemessene Brookfield-Viskosität von unter 20 mPa·s;
> eine bei 25 °C gemäß ASTM D 1321 gemessene Penetration von unter 10 1/10 mm; und
> einen gemäß ASTM D 721 gemessenen Ölgehalt von unter 1 Gew.-%.

11. Heißschmelzklebezusammensetzung gemäß einem der Ansprüche 1 bis 10, worin das Kohlenwasserstoffwachs ein Fischer-Tropsch-Wachs ist.

12. Heißschmelzklebezusammensetzung gemäß einem der Ansprüche 1 bis 11, worin der Alkohol ein C16- bis C32-Alkohol ist und worin die Carbonsäure eine C18- bis C22-Carbonsäure ist.

13. Heißschmelzklebezusammensetzung gemäß einem der Ansprüche 1 bis 12, worin die Heißschmelzklebezusammensetzung ein in der dynamisch-mechanischen Analyse ein Scher-tan-Delta (G''/ G') aufweist, das im Bereich von 60 °C bis 100 °C, vorzugsweise im Bereich von 65 °C bis 85 °C, gleich 1 ist.

14. Heißschmelzklebezusammensetzung gemäß einem der Ansprüche 1 bis 13, worin die Heißschmelzklebezusammensetzung bei einer Temperatur von 160 °C oder niedriger, vorzugsweise bei einer Temperatur im Bereich von 100 °C bis 160 °C, bevorzugter bei einer Temperatur im Bereich von 125 °C bis 145 °C, sprühbar ist.

15. Verfahren zum Herstellen der Heißschmelzklebezusammensetzung wie in einem der Ansprüche 1 bis 14 beansprucht, das Verfahren umfassend:

> das Mischen, im geschmolzenen Zustand, eines Polymers, eines Additivs, eines Harzes und gegebenenfalls eines Verarbeitungsöls und/oder eines Antioxidans miteinander in einem beheizten Mischer bis es homogen ist, wodurch eine geschmolzene Heißschmelzklebezusammensetzung hergestellt wird; und
> das Pelletieren der geschmolzenen Heißschmelzklebezusammensetzung, wodurch Heißschmelzklebezusammensetzungpellets hergestellt werden.

16. Verfahren zum Herstellen eines Laminats, das Verfahren umfassend:

> das Bereitstellen einer ersten Schicht und einer zweiten Schicht;
> das Beschichten der ersten Schicht und/oder der zweiten Schicht mit der Heißschmelzklebezusammensetzung wie in einem der Ansprüche 1 bis 14 beansprucht;
> das derartige Anordnen der ersten Schicht und der zweiten Schicht, dass sich die Beschichtung aus der Heißschmelzklebezusammensetzung auf der ersten Schicht und/oder auf der zweiten Schicht zwischen der ersten Schicht und der zweiten Schicht befindet; und
> das Pressen der ersten Schicht und der zweiten Schicht, wodurch das Laminat hergestellt wird.

17. Verfahren gemäß Anspruch 16, worin die erste Schicht eine Vliesstoffschicht oder eine Polymerschicht ist und die zweite Schicht eine Vliesstoffschicht oder eine Polymerschicht ist, und wenn die erste Schicht und/oder die zweite Schicht eine Polymerschicht bzw. Polymerschichten ist/sind, die Polymerschicht eine Polyethylen-Polymerschicht, eine Polypropylen-Polymerschicht oder eine Kombination daraus ist.

18. Laminat, das unter Verwendung der Heißschmelzklebezusammensetzung gemäß einem der Ansprüche 1 bis 14 hergestellt ist und diese somit umfasst.

19. Laminat gemäß Anspruch 18, worin das Laminat mindestens eine Vliesstoffschicht, vorzugsweise eine Vliesstoffschicht und eine Polymerschicht, umfasst, und worin die Polymerschicht eine Polyethylen-Polymerschicht ist.

20. Verwendung eines Laminats gemäß Anspruch 18 oder Anspruch 19 in Hygieneanwendungen, in Verpackungsanwendungen und/oder bei der Matratzenherstellung.

**Revendications**

1. Composition adhésive thermofusible, la composition adhésive thermofusible comprenant, sur la base du poids total de la composition adhésive thermofusible :

   de 20 à 70 % en poids d'un polymère ;
   de 1 à 15 % en poids d'un additif comprenant une cire hydrocarbonée et, en plus de la cire hydrocarbonée, un alcool et/ou un acide carboxylique, dans laquelle l'alcool est un alcool en C9 à C32, et dans laquelle l'acide carboxylique est un acide carboxylique en C11 à C32 ;
   de 20 à 70 % en poids d'une résine ; et
   facultativement un antioxydant et/ou une huile de traitement.

2. Composition adhésive thermofusible selon la revendication 1, dans laquelle la composition adhésive thermofusible comprend de 30 à 60 % en poids du polymère, sur la base du poids total de la composition adhésive thermofusible.

3. Composition adhésive thermofusible selon la revendication 1 ou la revendication 2, dans laquelle la composition adhésive thermofusible comprend de 3 à 15 % en poids de l'additif, sur la base du poids total de la composition adhésive thermofusible.

4. Composition adhésive thermofusible selon l'une quelconque des revendications 1 à 3, dans laquelle la composition adhésive thermofusible comprend de 25 à 67 % en poids de la résine, sur la base du poids total de la composition adhésive thermofusible.

5. Composition adhésive thermofusible selon l'une quelconque des revendications 1 à 4, dans laquelle le polymère est un polymère de polyoléfine, de préférence dans laquelle le polymère de polyoléfine est un copolymère de poly-alpha-oléfine amorphe (APAO), un homopolymère oléfinique ou un copolymère séquencé oléfinique.

6. Composition adhésive thermofusible selon la revendication 5, dans laquelle le copolymère séquencé oléfinique est un copolymère d'éthylène-propylène ou un copolymère d'éthylène-butène.

7. Composition adhésive thermofusible selon la revendication 5 ou la revendication 6, dans laquelle le polymère de polyoléfine présente une ou plusieurs des propriétés suivantes :

   une viscosité Brookfield à 190°C mesurée selon la norme ASTM D 3236 de 1 500 à 20 000 mPa.s, de préférence de 1 500 à 7 570 mPa.s ;
   un point de ramollissement bille et anneau mesuré selon la norme ASTM E 28 compris entre 90°C et 130°C ; et
   une densité de 0,8 à 0,9 g/cm$^3$.

8. Composition adhésive thermofusible selon l'une quelconque des revendications 1 à 7, dans laquelle l'additif comprend, sur la base du poids de l'additif, de 99 à 30 % en poids de cire hydrocarbonée et

   de 1 à 70 % en poids de l'alcool, ou
   de 1 à 70 % en poids de l'acide carboxylique ; ou
   de 1 à 70 % en poids de l'alcool et de l'acide carboxylique combinés.

9. Composition adhésive thermofusible selon l'une quelconque des revendications 1 à 8, dans laquelle la cire hydrocarbonée présente un point de figement dans une plage de 65°C à 115°C, de préférence dans une plage de 80°C à 108°C.

10. Composition adhésive thermofusible selon l'une quelconque des revendications 1 à 9, dans laquelle la cire hydrocarbonée possède une ou plusieurs des propriétés suivantes :

une viscosité Brookfield à 135 °C mesurée selon la norme ASTM D 3236 inférieure à 20 mPa.s ;
une pénétration à 25°C mesurée selon la norme ASTM D 1321 inférieure à 10 1/10 mm; et
une teneur en huile mesurée selon la norme ASTM D 721 inférieure à 1 % en poids.

11. Composition adhésive thermofusible selon l'une quelconque des revendications 1 à 10, dans laquelle la cire hydrocarbonée est une cire Fischer-Tropsch.

12. Composition adhésive thermofusible selon l'une quelconque des revendications 1 à 11, dans laquelle l'alcool est un alcool en C16 à C32, et dans laquelle l'acide carboxylique est un acide carboxylique en C18 à C22.

13. Composition adhésive thermofusible selon l'une quelconque des revendications 1 à 12, dans laquelle la composition adhésive thermofusible présente un cisaillement tan delta (G" / G') dans l'analyse mécanique dynamique qui est égal à 1 dans la plage de 60°C à 100°C, de préférence dans la plage de 65°C à 85°C.

14. Composition adhésive thermofusible selon l'une quelconque des revendications 1 à 13, dans laquelle la composition adhésive thermofusible peut être pulvérisée à une température égale ou inférieure à 160°C, de préférence à une température comprise entre 100°C et 160°C, plus préférablement à une température comprise entre 125°C et 145°C.

15. Procédé de production de la composition adhésive thermofusible selon l'une quelconque des revendications 1 à 14, le procédé comprenant les étapes consistant à :

mélanger, à l'état fondu, un polymère, un additif, une résine et facultativement une huile de traitement et/ou un antioxydant les uns avec les autres dans un mélangeur chauffé jusqu'à ce qu'ils soient homogènes, pour produire ainsi une composition adhésive thermofusible fondue ; et
granuler la composition adhésive thermofusible fondue, pour ainsi produire des granulés adhésifs thermofusibles.

16. Procédé de production d'un stratifié, le procédé comprenant les étapes consistant à :

fournir une première couche et une seconde couche ;
revêtir la première couche et/ou la seconde couche avec la composition adhésive thermofusible selon l'une quelconque des revendications 1 à 14 ;
agencer la première couche et la seconde couche de telle sorte que le revêtement de composition adhésive thermofusible sur la première couche et/ou sur la seconde couche soit positionné entre la première couche et la seconde couche ; et
presser la première couche et la seconde couche l'une contre l'autre pour produire le stratifié.

17. Procédé selon la revendication 16, dans lequel la première couche est une couche non tissée ou une couche de polymère, et la seconde couche est une couche non tissée ou une couche de polymère, et dans lequel la première couche et/ou la seconde couche est/sont une/des couche(s) de polymère, dans lequel la couche de polymère est une couche de polymère de polyéthylène, une couche de polymère de polypropylène, ou une combinaison de celles-ci.

18. Stratifié produit en utilisant, et ainsi comprenant, la composition adhésive thermofusible selon l'une quelconque des revendications 1 à 14.

19. Stratifié selon la revendication 18, dans lequel le stratifié comprend au moins une couche non tissée, de préférence au moins une couche non tissée et une couche de polymère, et dans lequel la couche de polymère est une couche de polymère de polyéthylène.

20. Utilisation d'un stratifié selon la revendication 18 ou la revendication 19 dans des applications d'hygiène, dans des applications d'emballage et/ou dans la fabrication de matelas.

**EP 4 482 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20170130094 A
- WO 2020049454 A
- CN 104762032 A
- EP 632077 A2
- WO 1996015170 A1
- EP 2640791 B1
- DE 10048923 A1
- US 10793754 B2